(19) Europäisches Patentamt
European Patent Office
Office européen des brevets

(11) EP 2 801 846 B1

(12) EUROPÄISCHE PATENTSCHRIFT

(45) Veröffentlichungstag und Bekanntmachung des Hinweises auf die Patenterteilung:
24.07.2019 Patentblatt 2019/30

(51) Int Cl.:
G02B 1/111 (2015.01)          G02B 1/113 (2015.01)
G02B 1/12 (2006.01)           G02B 1/14 (2015.01)
G02C 7/02 (2006.01)

(21) Anmeldenummer: 14163993.0

(22) Anmeldetag: 09.04.2014

(54) **Optisches Element mit einer Beschichtung hoher Diffusivität**

Optical element with a high diffusion coating

Élément optique doté d'un revêtement à haute diffusivité

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.05.2013 DE 102013208310**

(43) Veröffentlichungstag der Anmeldung:
**12.11.2014 Patentblatt 2014/46**

(60) Teilanmeldung:
**19179410.6**

(73) Patentinhaber: **Carl Zeiss Vision International GmbH**
**73430 Aalen (DE)**

(72) Erfinder:
• **Hugenberg, Norbert**
  **73434 Aalen (DE)**
• **Haidl, Markus**
  **73431 Aalen (DE)**
• **Von Blanckenhagen, Bernhard**
  **73433 Aalen (DE)**
• **Holz, Lothar**
  **73432 Unterkochen (DE)**
• **Kraus, Stefan**
  **73434 Aalen (DE)**
• **Macionczyk, Frank**
  **73447 Oberkochen (DE)**
• **Krause, Michael**
  **89081 Ulm (DE)**
• **Green, Erwin**
  **73432 Aalen (DE)**
• **Winter, Karl-Heinz**
  **73457 Essingen (DE)**
• **Glöge, Thomas**
  **73614 Schorndorf (DE)**
• **Faul, Silvia**
  **73434 Aalen (DE)**
• **Kollo, Anja**
  **73453 Abtsgmünd (DE)**
• **Peng, Bin**
  **73434 Aalen (DE)**
• **Pütz, Dr., Jörg**
  **73431 Aalen (DE)**
• **Kiefer, Patrick**
  **75239 Eisingen (DE)**
• **Hanßen, Adalbert**
  **73434 Aalen (DE)**
• **Krieger, Michael**
  **73434 Aalen (DE)**
• **Neuffer, Andreas**
  **71679 Asperg (DE)**
• **Stroisch, Marc**
  **73431 Aalen (DE)**

(74) Vertreter: **Gauss, Nikolai et al**
**Pfiz/Gauss Patentanwälte PartmbB**
**Tübingerstraße 26**
**70178 Stuttgart (DE)**

(56) Entgegenhaltungen:
EP-A1- 2 437 084          EP-A2- 0 698 798
US-A1- 2011 058 142       US-A1- 2011 305 827

**Beschreibung**

Die Erfindung betrifft ein optisches Element, insbesondere ein Brillenglas oder einen Brillenglas-Rohling, mit einem aus einem transparenten Kunststoff hergestellten Substratkörper, und mit einer mehrere Schichten aufweisenden Beschichtung, die eine an den Substratkörper angrenzende Hartlackschicht und eine auf der Hartlackschicht angeordnete Antireflexbeschichtung mit einem ein- oder mehrschichtigen Aufbau umfasst.

Ein derartiges optisches Element ist in Form von einer als Brillenglas ausgebildeten optischen Linse z. B. aus der EP 2 437 084 A1 bekannt.

Für optische Linsen, insbesondere für Brillengläser wird heutzutage anstelle von Silikatglas als Material zunehmend Kunststoff eingesetzt, der im sichtbaren Spektralbereich transparent ist. Gegenüber Silikatglas bietet Kunststoff die Vorteile eines geringeren Gewichts, einer höheren Bruchfestigkeit, einer Färbbarkeit und der Möglichkeit, randlose Fassungen anzubringen. Ein bekannter Nachteil von optischen Linsen aus Kunststoff ist jedoch, dass deren Oberfläche für mechanische Spannungen sehr anfällig ist und leicht durch Verkratzen beschädigt werden kann.

Um diese Anfälligkeit für mechanische Spannungen und Verkratzen bei optischen Linsen aus Kunststoff zu minimieren, wird auf den Kunststoff eine Beschichtung mit einer Hartlackschicht aufgetragen, welche die optische Linse vor mechanischen Einwirkungen schützen soll.

Des Weiteren ist es bekannt, optische Elemente mit einer Beschichtung für das Entspiegeln zu versehen. Bei Brillengläsern lassen sich damit störende Spiegelungen vermeiden. Beschichtungen für das Entspiegeln enthalten in der Regel wenigstens eine Schicht aus einem anorganischen, oxidischen Material, das optisch transparent ist. Eine Beschichtung für das Entspiegeln kann insbesondere eine Folge von Schichten aus optisch transparentem, anorganischem, oxidischem Material enthalten, bei der Schichten mit einem ersten Brechungsindex und Schichten mit einem zweiten, gegenüber dem ersten Brechungsindex höheren zweiten Brechungsindex aufeinanderfolgend abgewechselt sind.

Darüber hinaus ist es bekannt, ein optisches Element mit einer Beschichtung für das Entspiegeln auszubilden, die auch vor dem Verkratzen schützt. In der EP 0 698 798 A2 wird z. B. hierfür eine Beschichtung für das Entspiegeln vorgeschlagen, die eine Schicht aus Borosilikatglas enthält, die mittels eines PVD (Physical Vapour Deposition)-Verfahrens auf einen vorbeschichteten Substratkörper aufgedampft wird.

In einer Beschichtung auf einem Substratkörper aus Kunststoff können Defekte entstehen, die durch das Einlagern von Wasserdampf bzw. Wassermolekülen in den Substratkörper ausgelöst werden, wenn dieser mit Feuchtigkeit, d. h. Wasser oder Wasserdampf aber auch mit gängigen Reinigungsmedien wie z. B. Alkohol oder Aceton in Berührung kommt.

In der US 2011/058142 A1 ist eine Brillenglas-Beschichtung mit einer Hartlackschicht beschrieben, die aus zwei übereinander liegenden Teil-Schichten aus Hartlack besteht. Hier ist die untere Teil-Schicht mit einer Corona-Entladung behandelt oder mit einem Fluortensid als Verlaufsadditiv hergestellt.

Im Regelfall hat eine Beschichtung eine zumindest durchgangsbehindernde, häufig sogar sperrende Wirkung für diese Stoffe, mit denen insbesondere ein Brillenglas über seine Lebensdauer hinweg immer wieder in Berührung kommt.

Die US 2011/305827 A1 offenbart eine Brillenglas-Beschichtung die eine Schicht mit einer Porenstruktur aufweist. Diese Schicht mit Porenstruktur hat eine anti-verschmutzende Wirkung. Sie ist als eine Deckschicht auf eine Schicht auf der Oberfläche des Substratkörpers aufgetragen.

Wenn diese Stoffe z. B. aufgrund von Beschädigungen der Beschichtung in ein optisches Element eindringen, kann das zur Folge haben, dass bei dem optischen Element der Substratkörper oder auch eine auf diesen aufgetragene Schicht wie z. B. eine Hartlackschicht aufquillt. In der Regel führt das dann bei dem optischen Element zu lokalen Veränderungen einer optisch wirksamen Fläche. Aufgrund einer einzelnen Kratzstelle kann das optische Element somit auf diese Weise leicht in einem Bereich beschädigt werden, der sich über einen Quadratmillimeter oder auch mehrere Quadratmillimeter erstreckt. In diesem Bereich kann sich eine optisch wirksame Fläche des optischen Elements auch anheben, oft um 0,1 $\mu$m oder sogar um bis zu 1 $\mu$m.

Zwar diffundieren die in eine solche Schicht aus Hartlack und/oder einen Kunststoffkörper eingedrungenen Stoffe mit der Zeit wieder heraus, wenn das optische Element den betreffenden Stoffen nicht mehr ausgesetzt ist. Diese Diffusionsvorgänge führen jedoch zu lokalen Volumenänderungen, die teilweise irreversibel sind. Sie verursachen insbesondere Oberflächenverformungen, die z. B. nicht nur Punkt- und Strichmuster (Verwerfung) auf einer Beschichtung hervorrufen, sondern bei Brillengläsern auch mit bloßem Auge unter Umgebungsbeleuchtung erkennbare Schlieren und darüber hinaus auch Schichtdefekte aufgrund von mechanischen Spannungen verursachen können.

Aufgabe der Erfindung ist es deshalb, ein optisches Element mit einer dauerhaften und dabei kratzfesten Beschichtung auf einem Substratkörper aus Kunststoff bereitzustellen, und ein Verfahren für das Herstellen von einem solchen optischen Element anzugeben.

Diese Aufgabe wird durch ein optisches Element mit den Merkmalen des Anspruchs 1 und ein Verfahren mit den Merkmalen des Anspruchs 10 gelöst. Vorteilhafte Ausführungsformen der Erfindung sind in den Unteransprüchen angegeben.

Die Erfinder haben erkannt, dass bei einem optischen Element das Auftreten von Defekten einer auf einem Substratkörper aus Kunststoff aufgebrachten Beschichtung unterbunden werden kann, indem sichergestellt wird, dass die Beschichtung insbesondere eine Durchlässigkeit für Wasserdampf bzw. Wassermoleküle hat, die das Einlagern und Auslagern von Wassermolekülen in dem Kunststoffkörper auf einer Zeitskala ermöglicht, welche die Zeitskala für das Einlagern und Auslagern von Wassermolekülen an den Stellen, an denen eine Beschichtung beschädigt ist, d. h. die Zeitskala für das Einlagern und Auslagern von Wassermolekülen, wenn der Kunststoffkörper unbeschichtet ist, um nicht mehr als das etwa Fünffache, d.h. um nicht mehr als ungefähr eine halbe Größenordnung übersteigt.

Ein erfindungsgemäßes optisches Element kann als eine Linse, insbesondere als ein Brillenglas ausgebildet sein. Es hat einen Substratkörper aus Kunststoff, der in dem sichtbaren Spektralbereich transparent ist. Ein erfindungsgemäßes optisches Element hat eine Beschichtung mit mehreren Schichten, die eine an den Substratkörper angrenzende Hartlackschicht umfasst.

Die Beschichtung auf dem Substratkörper hat eine Diffusivität $D_F$, die das Aufnehmen von durch die Beschichtung hindurchtretenden Wassermolekülen in dem Substratkörper und das Freigeben von Wassermolekülen aus dem Substratkörper durch die Beschichtung hindurch aus einer auf der dem Substratkörper abgewandten Seite der Beschichtung angeordneten Luftatmosphäre mit einer Feuchtigkeitsstromdichte $j_D$ gewährleistet, die ausgehend von dem Gleichgewichtszustand der Menge der in dem Substratkörper in einer Luftatmosphäre bei 23°C und 50% relativer Luftfeuchte eingelagerten Wassermoleküle das Einstellen des Gleichgewichtszustands der Menge der in dem Substratkörper in einer Luftatmosphäre bei 40°C und 95% relativer Luftfeuchte eingelagerten Wassermoleküle innerhalb eines Zeitintervalls bewirkt, das um nicht mehr als eine Zeitspanne der Länge $\Delta t$ = 10h, bevorzugt um nicht mehr als eine Zeitspanne der Länge $\Delta t$ = 9h oder $\Delta t$ = 8h oder $\Delta t$ =7h oder $\Delta t$ = 6h oder $\Delta t$ = 5h oder $\Delta t$ = 4h oder $\Delta t$ =3h oder $\Delta t$ = 2h, besonders bevorzugt um nicht mehr als eine Zeitspanne der Länge $\Delta t$ = 1h länger ist als das für das Einstellen dieses Gleichgewichtszustands unter entsprechenden Bedingungen bei einem zu dem Substratkörper identischen unbeschichteten Substratkörper erforderliche Zeitintervall.

Unter der Diffusivität $D_F$ einer Beschichtung wird dabei die Durchlässigkeit der Beschichtung insbesondere für Wassermoleküle und Wasserdampf verstanden, d.h. das Vermögen der Beschichtung, insbesondere die Diffusion von Wasserdampf und Wassermolekülen durch die Beschichtung hindurch zuzulassen.

Die Diffusivität $D_F$ einer Beschichtung verknüpft die Feuchtigkeitsstromdichte $j_D$ für den die Beschichtung durchsetzenden Feuchtigkeitsstrom mit der Dichte $c_{FS}$ von Wassermolekülen in dem Substratkörper durch Diffusion eingelagerten Wassermolekülen und der Dichte $c_{FG}$ von Wassermolekülen in der Gasatmosphäre auf der dem Substratkörper abgewandten Seite der Beschichtung wie folgt:

$$j_D = D_F \, (c_{FG} - \alpha c_{FS}),$$

wobei $\alpha$ eine Konstante ist.

Im Sinne der Erfindung ist die Menge der in dem Substratkörper eingelagerten Wassermoleküle in einem Gleichgewichtszustand, wenn sich die in den Substratkörper eingelagerte Zahl der Wassermoleküle innerhalb von 24h um nicht mehr als 1 % ändert.

Die Menge der in einen Substratkörper eingelagerten Wassermolekülen kann z.B. gravimetrisch gemessen werden, oder auch, wie etwa in der Veröffentlichung von U. Schulz et al., Near-infrared spectroscopy for monitoring water permeability of optical coatings on plastics, Applied Optics, 862 26 (1997) beschrieben, durch Vermessen eines Absorptionsspektrums für den Substratkörper im infraroten Spektralbereich bestimmt werden.

Unter der relative Luftfeuchte wird hier das Verhältnis der tatsächlich enthaltenen zur maximal möglichen Masse an Wasserdampf in der Luft verstanden. Die relative Luftfeuchte ist das Verhältnis zwischen der absoluten Luftfeuchte und der maximalen Luftfeuchte von Luft bei einer bestimmten Temperatur T, d.h. das Verhältnis der in einem Luftvolumen V enthaltene Wasserdampfmasse $m_W$ zu dem in dem Luftvolumen V maximal möglichen Wasserdampfmasse bei der Temperatur T, wenn der Wasserdampfpartialdruck in der Luft so groß wie der Sättigungsdampfdruck des Wassers ist.

Der Kunststoff des Substratkörpers kann z.B. ein Polyurethan, ein Polythiourethan, PMMA, ein Polycarbonat, ein Polyacrylat oder ein Polydiethylenglycolbisallylcarbonat (CR 39) sein. Darüber hinaus kann es sich bei dem Kunststoff auch um ein Material aus der MR-Produktserie der Fa. Mitsui Chemicals, z.B. das Material MR-10®, MR-7®, MR-8® oder MR-174®, oder um das Material Trivex handeln.

Die Hartlackschicht in dem erfindungsgemäßen optischen Element ist bevorzugt in dem sichtbaren Spektralbereich transparent. Sie hat möglichst eine Brechzahl, die der Brechzahl des Kunststoffs des Substratkörpers entspricht oder die in der Nähe von dieser Brechzahl liegt, um eine gute optische Durchlässigkeit zu gewährleisten und unerwünschte Farbinterferenzen zu vermeiden. Die Hartlackschicht ist z.B. mit einem Tauchverfahren, einem Sprühverfahren oder einem Spincoat-Verfahren auf dem Substratkörper aufgebracht. Grundsätzlich ist es allerdings möglich, die Hartlackschicht auch mit einem anderen bekannten Verfahren auf den Substratkörper aufzutragen.

Die Hartlackschicht ist aus einer Sol-Gel-Hartlackzusammensetzung hergestellt, z.B. einer Sol-Gel-Hartlackzusammensetzung auf der Basis eines Acrylpolymers, eines Epoxypolymers, eines Urethanpolymers, eines Melaminpolymers, oder auch eines anorganischen Materials, insbesondere eines anorganischen Materials auf Quarzbasis, wie z.B. Siloxan. Das Material für die Sol-Gel-Hartlackzusammensetzung kann auch eine organisch modifizierte Keramik sein, bei der in eine Polysiloxanmatrix statt eines Sauerstoffatoms ein Metallatom, etwa Titan eingebaut ist. Gemäß einer besonders bevorzugten Ausführungsform ist die Sol-Gel-Hartlackzusammensetzung ein anorganisches-organisches Silikonharz.

Ein erfindungsgemäßes optisches Element hat bevorzugt eine Beschichtung mit einer Kratzfestigkeit, der eine in einem erweiterten Bayer-Test ermittelte, die Kratzfestigkeit einer Beschichtung charakterisierende Bayer-Zahl $Z_B$ mit $Z_B \geq 8$, vorzugsweise $Z_B \geq 10$, insbesondere $Z_B \geq 14$ entspricht.

Unter einem erweiterten Bayer-Test für das Charakterisieren der Kratzfestigkeit einer Beschichtung eines optischen Elements wird hier der auf eine solche Beschichtung entsprechend angewendete, nachfolgend beschriebene Kratzfestigkeitstest der Colts Laboratories für Brillengläser verstanden: Bei diesem Test wird eine bestimmte Menge scharfkantiger Teilchen über die Oberfläche des Brillenglases geführt und anschließend das Brillenglas optisch ausgewertet. Bei dem Bayer-Test der Colts Laboratories wird hierzu über an einem Boden einer kleinen Wanne befestigte Testgläser und Referenzgläser in Form von unbeschichteten Brillengläsern aus dem Kunststoff CR39 (Polyallyldiglycolcarbonat) mit 0 Dioptrien optischer Stärke durch seitliche Bewegung der Wanne ein abrasives Material geführt. Anschließend werden die Testgläser ausgewertet, indem die Quantität des durch das Verkratzen erzeugten Streulichts gemessen wird. Das Ergebnis des Tests ist eine Zahl, die angibt, um wie viel widerstandsfähiger das Testglas gegenüber dem Referenzglas aus dem unbeschichteten Material CR39, d.h. Polyallyldiglycolcarbonat ist.

Ein erfindungsgemäßes optisches Element kann insbesondere eine auf den Kunststoffkörper aufgebrachte Beschichtung haben, die wenigstens eine Antireflexbeschichtung mit wenigstens einer Schicht enthält, die bevorzugt mittels lonenbeschuss verdichtet ist, vorzugsweise mittels lonenbeschuss bei einer lonenstromdichte $I \geq 30 \mu A/cm^2$ an dem Ort der Teilschicht während der Dauer eines Aufdampfvorgangs für das Erzeugen der Teilschicht.

Die auf die Hartlackschicht aufgetragene Antireflexbeschichtung kann also bei einem erfindungsgemäßen optischen Element einen ein- oder mehrschichtigen Aufbau haben. Vorzugsweise wird für eine Antireflexbeschichtung ein zwei-, drei, vier-, fünf oder sechsschichtiger Aufbau gewählt. Bei Antireflexbeschichtungen mit einem zwei- oder mehrschichtigen Aufbau ist eine Schichtabfolge von Vorteil, bei der an eine Schicht mit einem niedrigen Brechungsindex eine Schicht mit einem hohen Brechungsindex angrenzt. In anderen Worten ist es für einen derartigen mehrschichtigen Aufbau günstig, dass sich Schichten mit einem niedrigen Brechungsindex und Schichten mit einem hohen Brechungsindex alternierend abwechseln. Zusätzlich können weitere Schichten, beispielsweise Haftschichten (z.B. mit einer Dicke in einem Bereich von ca. 5 nm bis 5 $\mu$m) vorgesehen werden, die keine optische Funktion aufweisen müssen, die jedoch für die Beständigkeit, Haftungseigenschaften, Klimabeständigkeit, etc., vorteilhaft sein können. Beispielsweise ist es auch möglich, die vorstehende Antireflexbeschichtung durch eine Verspiegelungsbeschichtung umfassend ein oder mehrere Verspiegelungsschichten und gegebenenfalls Antireflexschichten zu ersetzen oder sowohl eine Antireflexbeschichtung als auch eine Verspiegelungsbeschichtung vorzusehen.

Beispiele für geeignete Materialien für eine solche Antireflex- bzw. Verspiegelungsbeschichtung sind z.B. Silicium oder Bor, aber auch Oxide, Fluoride, Silicide, Boride, Carbide, Nitride sowie Sulfide von Metallen und Nichtmetallen. Für das Beschichten können diese Substanzen einzeln oder auch als Gemisch von zwei oder mehreren dieser Materialien eingesetzt werden.

Insbesondere eignen sich für das Eerzeugen einer Antireflexbeschichtung die Materialien SiO, $SiO_2$, $ZrO_2$, $Al_2O_3$, TiO, $TiO_2$, $Ti_2O_3$, $Ti_3O_4$, $CrO_x$ (mit x = 1-3), wie z.B. $Cr_2O_3$, $Y_2O_3$, $Yb_2O_3$, MgO, $Nb_2O_5$, $Ta_2O_5$, $CeO_2$ und $HfO_2$ etc. oder entsprechende Mischoxide, die Materialien $MgF_2$, $AlF_3$, $BaF_2$, $CaF_2$, $Na_3AlF_6$ und $Na_5Al_3F_{14}$, sowie die Materialien Cr, W, Ta und Ag.

Eine geeignete Antireflex- bzw. Verspiegelungsbeschichtung kann durch übliche Verfahren aufgebracht werden, wobei es bevorzugt ist, die einzelnen Schichten mittels Aufdampfen, Sputtern und/oder mittels CVD- insbesondere mittels plasmagestützten CVD-Verfahren zu erzeugen. Besonders bevorzugt ist es, eine Antireflexbeschichtung mittels Abscheiden aus einer Dampfphase so aufzubringen, dass eine verdichtete Schicht mit einer hohen Abriebfestigkeit gebildet wird.

Die Schichtdicke $d_A$ einer Antireflexbeschichtung mit einem ein- oder mehrschichtigen Aufbau unterliegt grundsätzlich keiner besonderen Beschränkung. Sie wird jedoch vorzugsweise auf eine Dicke $d_A$ mit $d_A \leq 2000$ nm, vorzugsweise $d_A \leq 1500$ nm, besonders bevorzugt $d_A \leq 500$ nm eingestellt. Die Mindestschichtdicke $d_{Am}$ der Antireflexbeschichtung liegt jedoch möglichst bei etwa $d_{Am} \geq 100$ nm.

Beispielsweise kann eine solche Antireflexbeschichtung aus abwechselnden hoch- bzw. niederbrechenden Schichten aus $TiO_2$ bzw. $SiO_2$ aufgebaut sein, mit beispielsweise $\lambda/8$-$TiO_2$, $\lambda/8$-$SiO_2$, $\lambda/2$-$TiO_2$ und $\lambda/4$-$SiO_2$, wobei die angegebene Schichtdicke hier bevorzugt auf die Wellenlänge $\lambda = 550$ nm bezogen ist. Eine solche Antireflexbeschichtung mit Mehrfachschichtenaufbau kann insbesondere mittels bekannter PVD-Verfahren (Physical Vapour Deposition) erzeugt werden.

Damit die betreffende Beschichtung für das optische Element eine hohe Kratzfestigkeit hat, ist es von Vorteil, wenn diese wenigstens eine im Wesentlichen aus $SiO_2$ bestehende Quarzschicht oder eine aus einer Mischung aus $SiO_2$ und $Al_2O_3$ bestehende Schicht mit einer Schichtdicke $d \geq 100$ nm enthält.

Die Erfinder haben erkannt, dass die Beschaffenheit der Oberfläche der Hartlackschicht, insbesondere die Grenzflächenenergie $\sigma_S$ dieser Oberfläche für die Diffusivität $D_F$ einer Beschichtung, die auf die Hartlackschicht aufgebrachte weitere Schichten umfasst, wie z.B. auf die Hartlackschicht aufgebrachte Teilschichten für eine Antireflexbeschichtung eine maßgebliche Rolle spielt.

Die Grenzflächenenergie $\sigma_S$ der Oberfläche eines Substrats ist ein Maß für den Energieaufwand, der benötigt wird, um diese Oberfläche zu verändern. Sie wird durch die zwischenmolekularen Kräfte an der Oberfläche bestimmt, die in einen dispersiven Anteil, der auf die intermolekularen van der Waals Kräfte zurückgeht, und einen polaren Anteil zerlegt werden können, deren Ursache permanente Dipolmomente von Molekülen in der Hartlackschicht sind.

Die Grenzflächenenergie $\sigma_S$ einer Oberfläche kann deshalb wie z.B. in der Veröffentlichung Kui-Xiang Ma et al., Investigation of surface energy for organic light emitting polymers and indium tin oxide, Thin Solid Films, 140 371 (2000) in einen von den permanenten Dipolen der Moleküle verursachten dispersiven Anteil $\sigma_S^{dispersiv}$ und einen polaren Anteil $\sigma_S^{polar}$ zerlegt werden, dessen Ursache die van der Waals Kräfte sind.

Die Erfinder haben herausgefunden, dass wenn der Beitrag des polaren Anteils $\sigma_S^{polar}$ zu der Grenzflächenenergie $\sigma_S = \sigma_S^{dispersiv} + \sigma_S^{polar}$ der Hartlackschicht möglichst groß ist, die Diffusivität einer Beschichtung mit einer oder mehreren auf der Hartlackschicht aufgetragenen Teilschichten einer Antireflexbeschichtung entscheidend erhöht werden kann.

Erfindungsgemäß wird das insbesondere erreicht, indem die Hartlackschicht auf dem Substrat mit einer Corona-Entladung behandelt wird.

Bei dem Behandeln der Hartlackschicht auf dem Substrat mit einer Corona-Entladung wird das Substrat mit der darauf angebrachten Hartlackschicht in einer Gasatmosphäre bei Atmosphärendruck zwischen zwei Elektroden gebracht, an die eine im kV-Bereich liegende Wechselspannung angelegt wird. Die Auslegung der Elektroden ist dabei so gewählt, das eine dielektrische Barriere-Entladung vorliegt, bei der lediglich Elektronen beschleunigt werden, deren mittlere freie Weglänge gering ist. Oberflächenmodifikationen können hier aber nicht nur durch die Corona-Entladung selbst, sondern auch durch das dabei entstehende Ozon auf chemische Weise induziert werden.

Das Erhöhen des polaren Anteils der Grenzflächenenergie kann erfindungsgemäß auch dadurch erreicht werden, dass die Hartlackschicht auf dem Substrat mit einem Niederdruck-Luftplasma behandelt wird.

Ein optisches Element in Form von einem Brillenglas bzw. Brillenglas-Rohling wird hierfür in einem Haltering, z.B. in dem Haltering eines Waschrahmens in eine Plasmakammer gestellt. In dieser Kammer wird mit Mikrowellen eine Niederdruck-Plasmaentladung aufrecht erhalten. Das damit erzeugte Plasma ist bevorzugt ein nicht-thermisches Plasma, d.h. die Elektronen haben in dem Plasma eine hohe Temperatur, die Temperatur der Ionen in dem Niederdruck-Plasma ist dagegen gering. Das Niederdruckplasma wird bevorzugt in dem Druckbereich $P \approx 10$ Pa betrieben. Durch Anordnen in dem Plasma werden die Kunststoffoberflächen von dem betreffenden Brillenglas aufgeladen, so dass die positiven Ionen in dem Plasma beschleunigt werden und mit der Oberfläche des Hartlacks wechselwirken. Von Vorteil ist es, in der Plasmakammer eine Mikrowellenabschirmung vorzusehen, die das Anordnen von elektrisch leitenden Baugruppen unmittelbar an der Plasmakammer ermöglicht. Eine solche Plasmakammer kann insbesondere mit einer Gasatmosphäre aus reinem Sauerstoff, Argon, einem Gemisch aus Sauerstoff und Stickstoff oder einem Gemisch aus Sauerstoff und Argon betrieben werden.

Darüber hinaus ist es eine Idee der Erfindung, die Hartlackschicht mit einer Glimmentladung zu behandeln, um damit den polaren Anteil der Grenzflächenenergie zu erhöhen.

Hierfür wird das das Substrat mit einer darauf angebrachten Hartlackschicht in einer Vakuumkammer mit einer Niederdruck-Gasatmosphäre angeordnet, deren Druck in dem Druckbereich zwischen 0,1 Pa und 1 Pa liegt. Die Vakuumkammer enthält eine Glimmelektrode für das Erzeugen einer Glimmentladung, die mit der Oberfläche der Hartlackschicht wechselwirkt. Die Gasatmosphäre in der Vakuumkammer besteht bevorzugt aus Sauerstoff, Argon, Luft oder entsprechenden Mischungen dieser Gase.

Eine Idee der Erfindung besteht auch darin, den Beitrag des polaren Anteils $\sigma_S^{polar}$ zu der Grenzflächenenergie $\sigma_S = \sigma_S^{dispersiv} + \sigma_S^{polar}$ der Hartlackschicht zu erhöhen, indem die Hartlackschicht mit aus einer ein Fluortensid als Verlaufsadditiv enthaltenden Sol-Gel-Hartlackzusammensetzung hergestellt wird.

Ein Gedanke der Erfindung besteht darüber hinaus auch darin, die Diffusivität der auf das Substrat aufgebrachten Beschichtung in der zu der Oberfläche senkrechten Richtung zu erhöhen, indem in der Beschichtung eine Vielzahl von vorzugsweise mikroskopischen und/oder mesoskopischen Poren eingebracht werden, d.h. Poren, deren Durchmesser gegenüber der Wellenlänge des sichtbaren Lichts klein sind, die aber sehr viel größer sind als die in der Größenordnung von einem oder mehreren Angström (Å) liegenden Abmessungen von Atomen oder Molekülen. Diese mikroskopischen und/oder mesoskopischen Poren können insbesondere die Form von Löchern haben und erstrecken sich ausgehend von der Oberfläche der Beschichtung auf der dem Substratkörper abgewandten Seite mindestens bis zu der Hartlackschicht.

Damit diese Strukturen nicht diffraktiv störend wirksam werden, bilden diese dabei bevorzugt keine regelmäßige Muster mit Periodenlängen in der Größenordnung der Lichtwellenlänge, sondern vielmehr mikroskopische bzw. mesoskopsiche Poren, die auf dem betreffenden optischen Element unregelmäßig verteilt sind.

Grundsätzlich können die Strukturen in wenigstens einem Abschnitt der Beschichtung auch translationssymmetrisch angeordnet sein. Diese Translationssymmetrie darf aber nur auf einem Längenbereich bestehen, dessen Größenordnung außerhalb der Wellenlängen des sichtbaren Lichts liegt. Mit anderen Worten, die Raumfrequenz k der Anordnung der mikroskopischen und/oder mesoskopischen Poren muss der folgenden Beziehung genügen:

$$k \gg 1 / 400\text{nm oder } k \ll 1 / 800\text{nm.}$$

Im Rahmen der Erfindung sind diese betreffenden Strukturen in Form von Löchern z.B. ähnlich wie eine Schrotladung über die Oberfläche statistisch verteilt. Diese Löcher wirken dann als mikroskopische bzw. mesoskopische Diffusionskanäle. Diese liegen so dicht, dass durch die Quellungsvorgänge keine makroskopischen lokalen Aufwellungen mehr auftreten, die optisch störend in Erscheinung treten oder in deren Folge sich die Entspiegelungsschichten so sehr lokal deformieren, dass ihre Haftung an den darunterliegenden Schichten beeinträchtigt wird.

Der Durchmesser $D_L$ der Löcher genügt dabei bevorzugt der folgenden Beziehung: $D_L \leq 5\mu\text{m}$, vorzugsweise $D_L \leq 1\ \mu\text{m}$, besonders bevorzugt $D_L \leq 0{,}2\mu\text{m}$.

Die mesoskopischen Poren werden erfindungsgemäß z.B. durch Beaufschlagen der Beschichtung mit einem vorzugsweise hochenergetischen Partikelstrahl hergestellt, insbesondere durch Beaufschlagen mit einem Partikelstrahl, der Edelgasatome und/oder Kohlenstoffatome und/oder Goldatome enthält. Alternativ hierzu ist es auch möglich, die mesoskopischen Poren durch Beaufschlagen der Beschichtung mit gepulstem Laserlicht zu erzeugen.

Eine Idee der Erfindung besteht auch darin, auf wenigstens einer innenliegenden Schicht der Beschichtung, insbesondere auf der Hartlackschicht, und/oder auf oder in dem Substratkörper Fremdstoffe in Form von Fremdmolekülen oder Nanopartikel anzulagern und/oder auf wenigstens einer innenliegenden Schicht der Beschichtung insbesondere auf der Hartlackschicht Fremdstrukturen anzubringen.

Die mesoskopischen Poren können z.B. durch Beaufschlagen der Beschichtung mit einem vorzugsweise hochenergetischen Partikelstrahl hergestellt werden, insbesondere durch Beaufschlagen mit einem Partikelstrahl, der Edelgasatome und/oder Kohlenstoffatome und/oder Goldatome enthält, um damit für die Diffusivität der Beschichtung auf dem Substratkörper einen hohen Wert zu erhalten.

Im Folgenden wird die Erfindung anhand der in der Zeichnung in schematischer Weise dargestellten Ausführungsbeispiele näher erläutert.

Es zeigen:

Fig. 1    einen Teilschnitt eines optischen Elements mit einer Beschichtung, die eine Hartlackschicht und darauf angeordneten Antireflexbeschichtung aufweist;

Fig. 2    einen Graph für das Erläutern der Diffusivität der Beschichtung;

Fig. 3    eine Anlage für das Behandeln der Hartlackschicht eines optischen Elements mit einer Corona-Entladung;

Fig. 4    eine Niederdruck-Plasmaanlage zum Erzeugen von einem Plasma für das Behandeln der Hartlackschicht eines optischen Elements;

Fig. 5    eine Anlage zum Erzeugen von einem Plasma für das Behandeln der Hartlackschicht mit einer Glimm-Entladung;

Fig. 6    die Abhängigkeit der Diffusivität der Beschichtung von dem polaren Anteil der Grenzflächenenergie der Oberfläche der Hartlackschicht;

Fig. 7    eine Anlage für das Aufbringen von Fremdstrukturen auf die Hartlackschicht eines optischen Elements;

Fig. 8    einen Teilschnitt eines weiteren optischen Elements mit einer Hartlackschicht und darauf angeordneten, von Löchern durchsetzten Teilschichten einer Antireflexbeschichtung;

Fig. 9    eine Anlage für das Erzeugen der Löcher in den Teilschichten einer Antireflexbeschichtung mittels Teilchenbeschuss; und

Fig. 10    eine Anlage für das Erzeugen der Löcher in den Teilschichten einer Antireflexbeschichtung mittels Laserlicht.

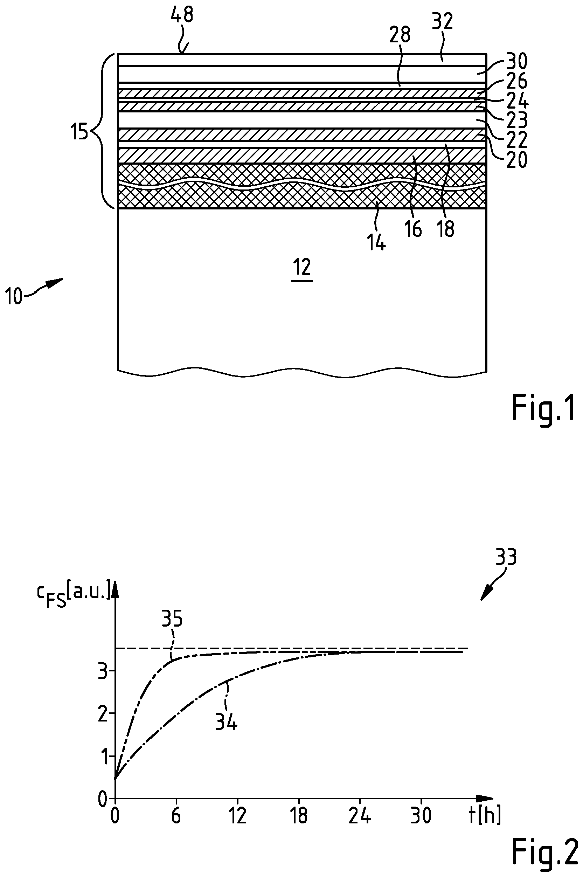

Das in der Fig. 1 in einem nicht maßstabsgetreuen Teilschnitt gezeigte optische Element 10 hat einen Substratkörper 12 aus Kunststoff, z.B. dem Kunststoff CR39. Auf dem Substratkörper 12 befindet sich eine Hartlackschicht 14, die an den Substratkörper 12 angrenzt. Die Hartlackschicht 14 ist mit einer vorzugsweise auf den Substratkörper 12 mittels Spin-Coaten aufgeschleuderten oder mittels Tauchbeschichten aufgebrachten Sol-Gel-Hartlackzusammensetzung aufgetragen.

Auf der Hartlackschicht 14 gibt es eine als Schichtstapel ausgebildete Beschichtung 15 mit einer mehrere Teilschichten umfassende Antireflexbeschichtung und einer Überzugsschicht (Top Coat). Dieser Schichtstapel umfasst eine auf die Hartlackschicht 14 aufgetragene Schicht 16 aus Aluminiumoxid ($Al_2O_3$) mit einer Dicke von 57 nm. Auf der Schicht 16 befindet sich eine 25 nm dicke Schicht 18 aus Quarz ($SiO_2$). Über der Schicht 18 liegt eine weitere Schicht 20 aus Aluminiumoxid, deren Dicke 44 nm beträgt. Auf die Schicht 20 folgt eine 61 nm dicke weitere Schicht 22 aus Quarz. Diese ist mit einer 60 nm dicken Schicht 23 aus Aluminiumoxid überzogen. Auf der Schicht 23 ist eine erste, das sichtbare Licht hochbrechende Schicht 24 aufgebracht, die aus Titanoxid besteht und 8,5 nm dick ist. Auf der Schicht 24 ist dann eine Schicht 26 aus Aluminiumoxid mit einer Dicke von 45 nm aufgetragen, die von einer zweiten hochbrechende Schicht 28 aus Titanoxid mit einer Dicke von 22 nm überzogen ist. Auf der Schicht 28 aus Titanoxid ist schließlich eine Schicht 30 aus Quarz mit einer Dicke von 106 nm aufgetragen.

Der Schichtstapel der Antireflexbeschichtung ist ein einer Elektronenstrahlverdampfungsanlage hergestellt. Eine solche hat eine Vakuumkammer, in welcher der Substratkörper 12 des optischen Elements mit der darauf angebrachten Hartlackschicht 14 angeordnet wird. Mittels eines Elektronenstrahls wird in der Vakuumkammer das Material der einzelnen Schichten sequentiell verdampft, so dass es sich auf dem Substratkörper sequentiell niederschlägt. Die Elektronenstrahlverdampfungsanlage enthält bevorzugt eine Ionenquelle, die es ermöglicht, die auf den Substratkörper 12 aufgedampften Schichten während des Aufdampfens zu verdichten.

Auf der Schicht 30 der Beschichtung 15 befindet sich als ein Top-Coat eine Schicht 32. Die Schicht 32 besteht aus einem superhydrophoben Material, das gewährleistet, dass sich das optische Element 10 leicht reinigen lässt.

Das Material der Schicht 32 ist bevorzugt ein Material aus der Klasse der perfluorierten Alkane, die dann chemisch über eine silanfunktionelle Gruppe an die OH-Gruppen der aus Quarz aufgebauten Schicht 30 angekoppelt sind. Diese-OH Gruppen an der Oberfläche werden in der Fachwelt auch als sogenannte Silanol-Gruppen bezeichnet.

Eine auf solchen perfluorierten Molekülen basierende Schicht ist aufgrund der vorstehend beschriebenen chemischen Ankopplung abriebfest, d.h. die Funktionalität ist auch im Gebrauchsfall des Brillenglases, also auch noch z.B. nach 2 Jahren täglichen Putzens durch den Brillenträger nicht abgetragen. Aufgrund der chemischen Eigenschaften eines solchen Top Coats bilden darauf Wassertropfen einen großen Kontaktwinkel (>90°) mit der Oberfläche aus. Makroskopische Wassertropfen perlen von dieser Oberfläche dann ab.

Die in der vorstehend beschriebenen Weise hergestellte Beschichtung 15 ist hochgradig kratzbeständig. Sie hat nämlich eine mit dem vorstehend erläuterten Bayer-Test ermittelte Bayer-Zahl $Z_B$ für die gilt: $Z_B \geq 10$.

Die Beschichtung 15 auf dem Substratkörper 12 hat dennoch eine Diffusivität $D_F$, die das Aufnehmen von durch die Beschichtung15 hindurchtretenden Wassermolekülen in dem Substratkörper 12 und das Freigeben von Wassermolekülen aus dem Substratkörper 12 durch die Beschichtung 15 hindurch aus einer auf der dem Substratkörper 12 abgewandten Seite der Beschichtung 15 angeordneten Luftatmosphäre mit einer Feuchtigkeitsstromdichte $j_D$ gewährleistet, die ausgehend von dem Gleichgewichtszustand der Menge der in dem Substratkörper 12 in einer Luftatmosphäre bei 23°C und 50% relativer Luftfeuchte eingelagerten Wassermoleküle das Einstellen des Gleichgewichtszustands der Menge der in dem Substratkörper 12 in einer Luftatmosphäre bei 40°C und 95% relativer Luftfeuchte eingelagerten Wassermoleküle innerhalb eines Zeitintervalls bewirkt, das um nicht mehr als eine Zeitspanne der Länge $\Delta t = 5h$ länger ist als das für das Einstellen dieses Gleichgewichtszustands unter entsprechenden Bedingungen bei einem zu dem Substratkörper 12 identischen unbeschichteten Substratkörper erforderlichen Zeitintervall.

Die Fig. 2 erläutert in dem Graph 33 die Diffusivität der Beschichtung 15 auf dem Substratkörper 12 eines optischen Elements 10. Die Fig. 2 zeigt mit der Kurve 34 das Ansteigen der Dichte $c_{FS}$ für die in den Substratkörper 12 eingelagerten Wassermoleküle als Funktion der Zeit t, wenn das optische Element 10 aus einer trockenen Umgebung heraus, in der die Luftfeuchtigkeit gering ist, in einer Umgebung mit einer hohen Luftfeuchtigkeit angeordnet wird. Nach etwa 24h ist die Dichte $c_{FS}$ für die in den Substratkörper 12 eingelagerten Wassermoleküle gesättigt, d.h. diese Dichte ist dann invariant gegenüber der Zeit.

Die Kurve 35 zeigt demgegenüber das Ansteigen der Dichte $c_{FS}$ der in einen unbeschichteten Substratkörper 12 eingelagerten Wassermoleküle, der im Übrigen zu dem der Kurve 35 zugrundeliegenden Substratkörper 12 identisch ist. Wie sich aus einem Vergleich der Kurven 35 und 34 ergibt, wird das Einstellen des Gleichgewichtszustands für die Dichte $c_{FS}$ von in dem durch die Beschichtung 15 bei dem optischen Element 10 zwar verlangsamt. Die Diffusivität $D_F$ der Beschichtung ist jedoch so groß, dass sie Länge des für das Einstellen des betreffenden Gleichgewichtszustands erforderlichen Zeitintervalls um nicht mehr als das 5-fache der Länge des Zeitintervalls ausdehnt, die erforderlich ist, damit sich bei einem zu dem Substratkörper 12 identischen, aber unbeschichteten Substratkörper der entsprechende Gleichgewichtszustand einstellt.

Diese Diffusivität $D_F$ der Beschichtung wird bei dem optischen Element 10 dadurch gewährleistet, dass der polare Anteil $\sigma_S^{polar}$ der Grenzflächenenergie $\sigma_S = \sigma_S^{dispersiv} + \sigma_S^{polar}$ der Hartlackschicht 14 durch Behandeln dieser Hartlackschicht mit einer Corona-Entladung in einer Anlage für das Erzeugen von einer solchen Corona-Entladung erhöht wird.

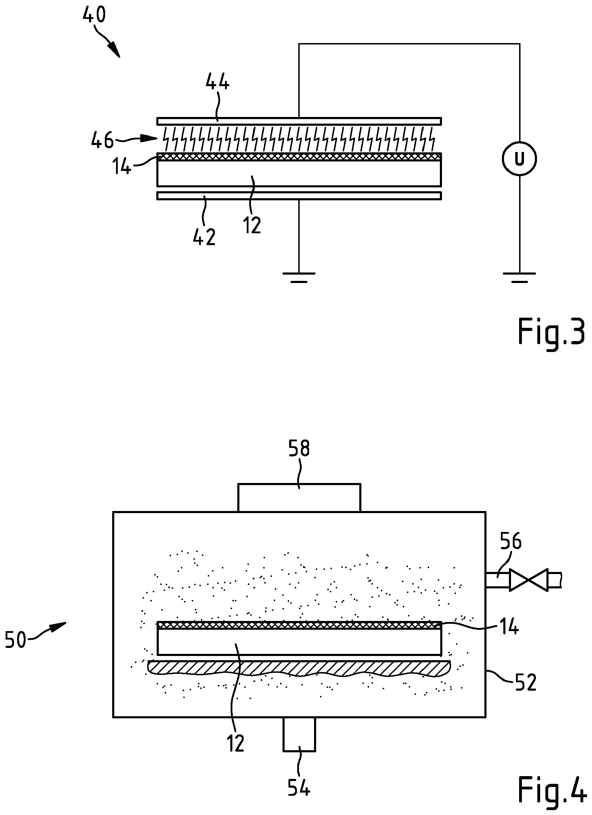

Die Fig. 3 zeigt eine solche Anlage 40. Die Anlage 40 hat eine erste geerdete, flächige Elektrode 42 und eine weitere, flächige Elektrode 44, an die eine Hochspannung U ≥ 1 kV angelegt werden kann. Zwischen den Beiden Elektroden 42, 44 hat die Anlage 40 einen Aufnahmebereich für das Anordnen eines Substratkörpers 12, auf dem eine entsprechende Hartlackschicht 14 aufgebracht ist. Das Anlegen von Hochspannung an die Elektrode 44 erzeugt einen Blitzregen 46, der die Hartlackschicht 14 beaufschlagt und der zusammen mit dem mittels des Blitzregens 46 erzeugten Ozon dazu führt, dass der polare Anteil der Grenzflächenenergie $\sigma_S$ der dem Substratkörper 12 abgewandten Oberfläche 48 der Hartlackschicht 14 erhöht wird.

Um die gewünschte Diffusivität $D_F$ der Beschichtung 14 bei dem in der Fig. 1 gezeigten optischen Element 10 zu gewährleisten, ist es alternativ oder zusätzlich auch möglich, die Hartlackschicht 14 mittels eines in einer Niederdruck-Plasmaanlage erzeugten Plasmas zu behandeln.

Die Fig. 4 zeigt eine hierfür geeignete Niederdruck-Plasmaanlage 50. Die Niederdruck-Plasmaanlage 50 hat eine Vakuumkammer 52 mit einem Aufnahmebereich für das Anordnen eines Substratkörpers 12 für ein optisches Element 10 mit einer darauf aufgebrachten Hartlackschicht 14. Die Vakuumkammer 52 hat einen Anschluss 54 für eine Vakuumpumpe. Die Vakuumkammer 52 hat einen Gas-Einlass 56, durch den in die Vakuumkammer 52 insbesondere Sauerstoff, Argon, einem Gemisch aus Sauerstoff und Stickstoff oder aus Sauerstoff und Argon eingeleitet werden kann. Die Niederdruck-Plasmaanlage 50 enthält einen Mikrowellengenerator 58, mittels dessen die Vakuumkammer 52 mit Mikrowellen beaufschlagt werden kann, um bei einem Druck P in der Vakuumkammer 52 von P ≈ 10 Pa ein Plasma zu zünden, mit dem die Hartlackschicht 14 auf dem Substratkörper 12 behandelt wird.

Alternativ oder zusätzlich ist es auch möglich, die Hartlackschicht 14 auf einem Substratkörper 12 mittels eines Plasmas zu behandeln, das mit einer Glimm-Entladung in einer Vakuumkammer erzeugt wird, um die gewünschte Diffusivität $D_F$ der Beschichtung 14 bei dem in der Fig. 1 gezeigten optischen Element 10 zu gewährleisten.

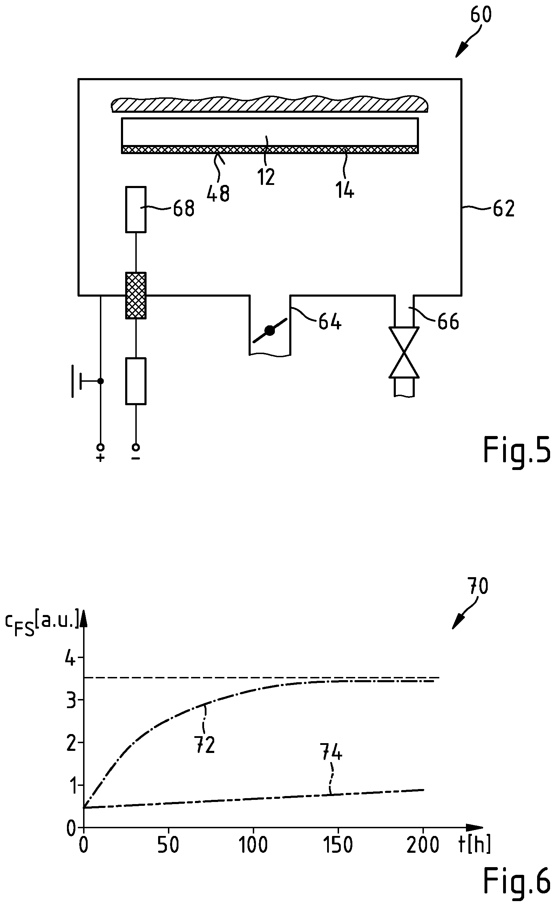

Die Fig. 5 zeigt eine solche Anlage 60. In der Anlage 60 gibt es eine Vakuumkammer 62 mit elektrisch leitenden Wänden und einem Aufnahmebereich für das Anordnen von einem Substratkörper 12 mit einer Hartlackschicht 14.

Die Vakuumkammer 62 hat einen Anschluss 64 für eine Vakuumpumpe und weist einen Gas-Einlass 66 auf. In der Anlage 60 gibt es eine Glimmelektrode 68, an die eine Hochspannung U ≥ 1 kV angelegt werden kann, um in einer aus Sauerstoff, Argon, Luft oder entsprechenden Mischungen bestehenden Gasatmosphäre, deren Druck P in einem Druckbereich zwischen 0,1 Pa und 1 Pa liegt, ein Plasma für das Behandeln der Oberfläche 48 der Hartlackschicht 14 zu zünden.

Um die gewünschte Diffusivität $D_F$ der Beschichtung 15 bei dem in der Fig. 1 gezeigten optischen Element 10 zu gewährleisten, ist es allerdings auch möglich, dass die Hartlackschicht 14 aus einer ein Fluortensid als Verlaufsadditiv enthaltenden Sol-Gel-Hartlackzusammensetzung hergestellt wird.

In der nachfolgende Tabelle sind die Grenzflächenenergie insgesamt sowie der dispersive Anteil und der polare Anteil der Grenzflächenenergie einer auf einen Substratkörper aus dem Material MR-8® in Form einer flüssigen Sol-Gel-Hartlackzusammensetzung mit dem Silikon-basiertem Verlaufsadditiv SF1188A der Fa. Momentive, einem Verlaufsadditiv auf der Basis eines Copolymers aus einem Polydimethylsiloxan und einem Polyoxyalkylen, und einer entsprechenden Sol-Gel-Hartlackzusammensetzung mit dem Verlaufsadditiv FC-4430 der Fa. 3M, das auf der Basis eines fluorierten polymeren Esters aufgebaut ist, d.h., das Fluortensid enthält, einander gegenübergestellt:

| Probe Nr. | Verlaufsadditiv | $\sigma_S$ [mJ/Nm] | $\sigma_S^{dispersiv}$ [mJ/Nm] | $\sigma_S^{polar}$ [mJ/Nm] |
|---|---|---|---|---|
| 1 | FC4430 | 23,89 | 21,93 | 1,96 |
| 2 | FC4430 | 23,13 | 21,10 | 2,03 |
| 3 | SF1188 | 24,42 | 23,43 | 0,99 |
| 4 | SF1188 | 24,68 | 23,49 | 1,19 |

Die dispersiven und polaren Anteile sind hier mit der sogenannten OWRK-Methode unter Verwendung der Testflüssigkeiten Diiodmethan und Ethylenglykol gemessen, die z.B. in der Dissertation von Carsten Weiß, Friedrich-Alexander-Universität Erlangen-Nürnberg (2002), veröffentlicht am 08.07.2004 auf der S. 54 und S. 55. beschrieben ist.

Die Tabelle zeigt, dass die Verwendung eines Verlaufsadditivs, das Fluortensid enthält, bewirkt, dass der polare Anteil der Grenzflächenenergie der auf einen Substratkörper aufgetragenen Hartlackschicht kleiner ist als bei einem Verlaufsadditiv, das Silikon-basiert ist.

Die Fig. 6 erläutert mit dem Graph 70 die Diffusivität $D_F$ der Beschichtung 15 auf dem Substratkörper 12 eines optischen Elements 10. Die Hartlackschicht 14 des Substratkörpers 12 ist hier aus einer Sol-Gel Hartlackzusammensetzung hergestellt, die als Verlaufsadditiv ein Fluortensid enthält. Die Fig. 6 zeigt mit der Kurve 72 das Ansteigen der Dichte $c_{FS}$ für die in den Substratkörper 12 eingelagerten Wassermoleküle als Funktion der Zeit t, wenn das optische Element 10 aus einer trockenen Umgebung heraus, in der die Luftfeuchtigkeit gering ist, in einer Umgebung mit einer hohen Luftfeuchtigkeit angeordnet wird. Nach etwa 150h ist hier die Dichte $c_{FS}$ für die in den Substratkörper 12 eingelagerten Wassermoleküle gesättigt, d.h. die Menge der in dem Substratkörper eingelagerten Wassermoleküle ist dann in etwa invariant gegenüber der Zeit.

Die Kurve 74 zeigt demgegenüber das Ansteigen der Dichte $c_{FS}$ der in den Substratkörper von einem dem in der Fig. 1 gezeigten optischen Element 10 entsprechenden optischen Element eingelagerten Wassermoleküle, der jedoch eine der Hartlackschicht 14 entsprechende Hartlackschicht hat, deren Aufbau und Dicke der Hartlackschicht 14 bei dem optischen Element 10 entspricht, die aber aus einer Sol-Gel-Hartlackzusammensetzung mit einem Silikon-basierten Verlaufsadditiv hergestellt ist. Wie aus der Kurve 64 hervorgeht, ist der Substratkörper bei diesem optischen Element auch nach mehr als 200h nicht auch nur ansatzweise gesättigt.

Um eine hohe Diffusivität $D_F$ für die Beschichtung 15 bei dem in der Fig. 1 gezeigten optischen Element 10 zu erhalten, ist es außerdem möglich, auf der Hartlackschicht 14 oder auch anderen innenliegenden Schichten der Antireflexbeschichtung Fremdstoffe, insbesondere Fremdmoleküle und/oder Fremdstrukturen, z.B. Nanopartikel anzulagern, etwa Nanopartikel aus $SiO_2$ oder auch Nanopartikel, die aus Polymeren bestehen.

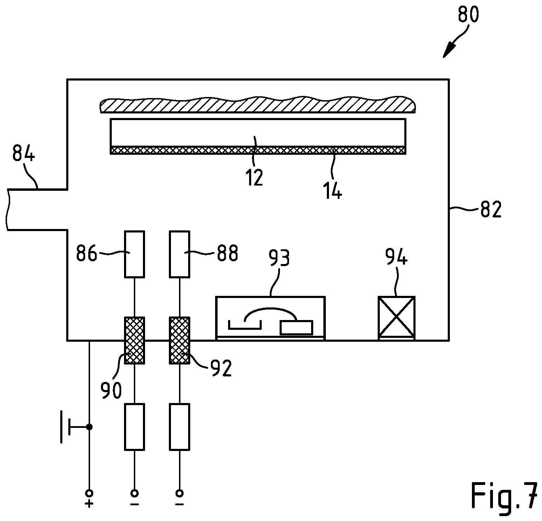

Die Fig. 7 zeigt eine Anlage 80 für das entsprechende Aufbringen von Fremdstrukturen auf eine solche Hartlackschicht oder auf weiteren Schichten eines optischen Elements.

Die Anlage 80 weist eine Vakuumkammer 82 mit elektrisch leitenden Wänden auf, in der ein mit einer Hartlackschicht 14 überzogener Substratkörper 12, z.B. ein Brillenglasrohling angeordnet werden kann. Die Vakuumkammer 82 hat eine Öffnung 84 für das Verbinden mit einer Ventilanordnung und Vakuumpumpe, die es ermöglichen, in der Vakuumkammer 82 eine exakt definierte Zusammensetzung für eine Gasatmosphäre zu erzeugen, die einen vorgebbaren Druck hat. In der Vakuumkammer 82 gibt es ringförmige Glimmelektroden 86, 88. Die Glimmelektroden 86, 88 sind aus einem Nanopartikelmaterial hergestellt. Die Glimmelektroden 86, 88 sind über Durchführungen 90, 92 in der Wand der Vakuumkammer 82 mit einer Einrichtung für das Bereitstellen einer Hochspannung verbunden. Durch Anlegen einer Hochspannung an die Glimmelektroden 86, 88 kann in der Vakuumkammer 82 eine Glimmentladung gezündet werden, bei der das Nanopartikelmaterial der Glimmelektroden auf die Hartlackschicht 14 bei einem Druck von z.B. $10^{-4}$ mbar aufgesputtert wird, so dass sich diese dort anlagern.

Es sei bemerkt, dass die Anlage 80 grundsätzlich auch für das Aufbringen von Teilschichten für eine Antireflexbeschichtung auf die Hartlackschicht 14 mit darauf angelagerten Nanopartikeln geeignet ist. Hierfür wird in der Anlage 80 ein Elektronenstrahlverdampfer 93 angeordnet, mit der dann die unterschiedlichen Materialen für Schichten in einer Antireflexbeschichtung auf den Substratkörper 12 aufgedampft werden können. Um die auf den Substratkörper 12 aufgedampften Schichten zu verdichten, wird in die Anlage 80 bevorzugt auch eine Ionenquelle 94 integriert. Diese Ionenquelle ist derart ausgelegt, dass sie einen Ionenbeschuss des Substratkörpers 12 beim Aufdampfen von Beschichtungen mit einer Ionenenergie $E_I$ ermöglicht, die günstiger Weise eingestellt werden kann und bevorzugt in einem Bereich $1eV \leq E_I \leq 100eV$ liegt.

Zu bemerken ist, dass die Glimmelektroden 86, 88 in der Vakuumkammer 82 ausreichend dicht bei dem Substratkörper 12 liegen müssen, damit sich die entsprechenden Nanopartikel auf diesem gleichmäßig niederschlagen können und dabei auf diesem dennoch einzeln gestreut liegen, so dass sie nicht sichtbar sind.

Entsprechende Nanopartikelbeläge kennt man z.B. als störende Effekte von lange benutzten Glimmlampen in aufgedampften Schichten. Hier will man sie jedoch viel weniger dicht erzeugen, als dies bei einer lange benutzten Glimmlampe der Fall ist. Darüber hinaus wird natürlich angestrebt, das sich diese Nanopartikelbeläge entsprechend schnell erzeugen lassen.

Anders als bei einer Glimmlampe wählt man deshalb hier ein Elektrodenmaterial, das beim einzustellenden Restgasdruck und der Glimmentladungsspannung relativ gut zerstäubt. Darüber hinaus wählt man das Elektrodenmaterial hier so, dass es die bei dem betreffenden optischen Element 10 darüber abgeschiedenen Schichten lokal besonders effektiv mit Störstellen beeinflusst. Die Wahl geeigneter Materialien für die Nanopartikel, die Gassorte für das zu ionisierende Restgas, den einzustellenden Druck und die Spannung für die Glimmentladung hängen dabei von dem gewünschten Aufbau der Schichten ab, insbesondere von dem gewünschten Aufbau derjenigen Schicht, die direkt auf die Nanopartikel aufgedampft wird.

Alternativ zu einem Aufbringen von Störpartikeln auf eine Hartlackschicht 14 ist es auch möglich, vor dem Bedampfen einer Schicht in einer entsprechenden Vakuumanlage Fremdstoffe oder Fremdstrukturen (z.B. Moleküle oder Nanopartikel) als Störstellen oder Keime für Störstellen auf der Oberfläche zu deponieren und dann später zu überdampfen. Dies kann z.B. auch dadurch erfolgen, dass man vorher in das Material, z.B. das Grundmaterial des Substratkörpers 12, etwa in ein Brillenglas, oder auch in die Hartlackschicht, wenn angestrebt wird, die Eigenschaften der Schicht zu modifizieren, fein verteilte Stoffe einbringt, die, sofern sie an der Oberfläche liegen, die chemische Bindungskraft der aufzubringenden Schicht lokal beeinflussen, so dass an den Stellen, an denen die Partikel aus dem Grundmaterial an der Oberfläche liegen, in der aufgedampften Schicht Störstellen hervorgerufen werden.

Darüber hinaus ist es möglich, für Stoffe, die bereits in einer Hartlackschicht oder einem Grundmaterial fein verteilt sind, in einem definierten Prozessschritt eine chemische Reaktion auszulösen, die dafür sorgt, dass oberflächlich fein verteilte isolierte Stellen entstehen, an denen eine an einer solchen Stelle aufgedampfte Schicht eine Lücke hat.

Durch auf diese Weise von außen aufgebrachte Störpartikel oder eine von außen induzierte chemische Reaktion können insbesondere in einer aufgedampften Antireflexbeschichtung so Störstellen erzeugt werden, welche die Diffusivität $D_F$ einer Beschichtung 15 eines optischen Elements 10 deutlich erhöhen können.

Zu bemerken ist auch, dass die Diffusivität $D_F$ einer Beschichtung 15 eines optischen Elements 10 auch durch eine gezielte Modifikation der Oberflächenchemie und -energie erzielt werden kann. Eine solche Modifikation einer Grenzfläche bei einem optischen Element 10 kann darüber hinaus z.B. auch mit Beschichtungen erzeugt werden, die in nasschemischen oder physikalischen Verfahren hergestellt werden. Darüber hinaus können solche Grenzflächen auch mittels Drucken, etwa mittels Nano-Imprints oder auch durch Beschießen mit hochenergetischen Partikeln modifiziert werden.

In diesem Zusammenhang ist festzustellen, dass Nanopartikel an einer auf einen Substratkörper 12 aufgetragenen Schicht grundsätzlich auch mit dem Elektronenstrahlverdampfer 93 in der Anlage 80 niedergeschlagen werden können.

Außerdem ist zu bemerken, dass es grundsätzlich auch möglich ist, in eine Beschichtung gezielt Störstellen in Form von Fremdstoffen einzubauen, welche die Diffusivität $D_F$ der Beschichtung erhöhen.

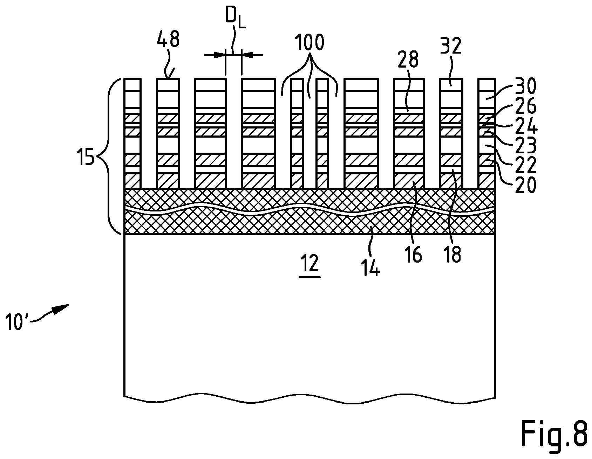

Die Fig. 8 zeigt ein weiteres optisches Element 10' als Teilschnitt, das einen Substratkörper 12 aus Kunststoff, z.B. aus dem Kunststoff CR39 aufweist. Soweit der Aufbau des optischen Elements 10' dem Aufbau des optischen Elements 10 aus der Fig. 1 entspricht, ist dieser in der Fig. 8 durch die in der Fig. 1 verwendeten Zahlen als Bezugszeichen kenntlich gemacht.

Anders als das optische Element 10 aus Fig. 1 enthält das optische Element 10' eine Vielzahl von Löchern 100. Die Löcher 100 erstrecken sich von der Oberfläche 48 der Beschichtung 15 zu der Hartlackschicht 14. Jedoch wird die Hartlackschicht 14 von den Löchern 100 nicht durchsetzt. Die Löcher 100 wirken als mikroskopische und/oder mesoskopische Poren in der Beschichtung 15, die deren Diffusivität $D_F$ erhöhen. Der Durchmesser $D_L$ der Löcher genügt dabei der folgenden Beziehung: $D_L \leq 5\mu m$.

Die Löcher 100 in der Beschichtung 15 des optischen Elements 10' sind z.B. mittels eines fokussierten Elektronen- oder Ionenstrahls in einer Vakuumkammer erzeugt.

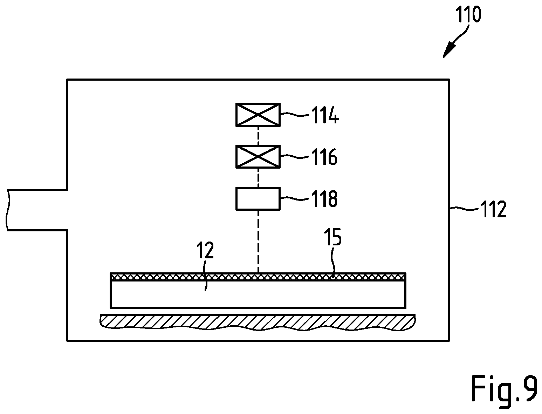

Die Fig. 9 zeigt eine Anlage 110 für das Erzeugen der vorstehend erläuterten mikroskopischen bzw. mesoskopischen Poren in der Beschichtung 15. Die Anlage 110 hat eine Vakuumkammer 112, in der eine Elektronen- und/oder Ionenquelle 114 angeordnet ist. Der Elektronen- und/oder Ionenquelle 114 ist eine Beschleunigungseinheit 116 und eine Ablenkungseinheit 118 zugeordnet. Die Elektronen- und/oder Ionenquelle 114 dient für das Beaufschlagen der Beschichtung 15 von einem in der Vakuumkammer 112 angeordneten optischen Element 10' mit einem Teilchenstrahl aus Elektronen und/oder Ionen.

Mit dem Teilchenstrahl werden die Elektronen oder Ionen statistisch verteilt auf die Oberfläche des zu behandelnden optischen Elements 10' geschossen, so dass die gesamte Oberfläche 48 mit diffusionsgängigen Löchern übersäht wird.

Das muss nicht mit einem einzigen Partikel passieren, es kann vielmehr auch sequentiell geschehen, indem man die Ablenkstellungen jeweils lang genug unverändert lässt. Um mehrere Löcher zugleich zu erzeugen, kann vor der Ablenkeinheit z.B. noch eine elektronen- oder ionenoptisch beugende Struktur angeordnet sein.

Die Beschleunigungseinheit 116 gewährleistet, dass die Elektronen oder Ionen ausreichend große Energie besitzen, damit sie eine bezüglich ihrer Diffusionseigenschaften zu modifizierenden Beschichtung 15 perforieren, so dass darin die sonst als Diffusionsbarriere wirkenden Schichten durchlässiger werden.

Grundsätzlich kann in einer Anlage 110 auch das Perforieren von Schichten in der Beschichtung 15 und das Aufbringen von verschiedenen Schichten kombiniert werden. Diese Maßnahme bietet den Vorteil, dass entsprechende Löcher mit einer geringeren Energie der Elektronen und/oder Ionen erzeugt werden können.

Die Ablenkungseinheit 118 steuert den von der Elektronen- und/oder Ionenquelle 114 bereitgestellten Teilchenstrahl dabei bevorzugt über einen Zufallszahlengenerator. Damit lässt sich erreichen, dass die in der Anlage 110 in der Beschichtung 15 von einem optischen Element 10' erzeugten Löcher 100 annähernd statistisch über die Fläche verteilt sind, so dass die mikroskopischen bzw. mesoskopischen Strukturen der Löcher unter sichtbarem Licht keine erkennbaren Beugungserscheinungen erzeugen.

Ein anderer Weg für das gleichzeitige Erzeugen einer Vielzahl von Löchern mittels Ionenbeschuss besteht darin, vor der eigentlichen Ionenquelle eine Platte mit einer Vielzahl statistisch verteilter Löcher vorzusehen, die als eine Siebblende wirkt. Diese Siebblende wird dann ionenoptisch auf die Oberfläche des betreffenden optischen Elements abgebildet. Das optische Element wird dabei so lange dem entsprechenden Teilchenstrahl ausgesetzt, bis die erzeugten Löcher in der Beschichtung oder einer Schicht der Beschichtung ausreichend tief sind, um den gewünschten diffusionsbeeinflussenden Effekt zu erreichen. Durch Bewegen der Platte oder des optischen Elements ist es möglich, die Stellen, an denen das optische Element mit einem Teilchenstrahl beaufschlagt wird, zu verlagern.

Zu bemerken ist, dass die Elektronen oder Ionen eine ausreichend große kinetische Energie oberhalb der Zerstörschwelle der zu bearbeitenden Oberfläche haben müssen. Im Fall des Beschusses mit Ionen kann auch die Wahl der Ionenart auf den Effekt einen Einfluss haben.

Zu bemerken ist auch, dass in einer Beschichtung 15 von einem optischen Element 10 mit einem fokussierten Elektronen- oder Ionenstrahl grundsätzlich auch ein regelmäßiges Muster von "Löchern" oder Störungen erzeugt werden kann. Solche Muster könnten z.B. dadurch zustande kommen, dass der fokussierte Elektronen- oder Ionenstrahl selbst eine Interferenzfigur ist und deshalb eine Regelmäßigkeit beinhaltet: Dies hat gegenüber dem vorstehend ausgeführten den Vorteil, dass mit einem "Brennvorgang" eine Vielzahl von Löchern auf einmal erzeugt werden kann, indem man die betreffenden Einzel-Interferenzfiguren schrittweise nebeneinander platziert, um so das ganze optische Element, d.h. z.B. das Brillenglas zu überdecken. Für den Fall, dass es die Ausdehnung der abgebildeten Interferenzfiguren oder die Fokussierungsbedingungen nicht zulassen, das ganze optische Element auf einmal abzudecken, muss man dafür sorgen, dass die auf das optische Element projizierte Interferenzfigur entweder eine so kleine oder so große Periodenlänge hat, dass keine erkennbare Beugung mehr auftritt: Periodenlängen in der Größenordnung der Lichtwellenlänge sind also bei den projizierten Mustern zu vermeiden.

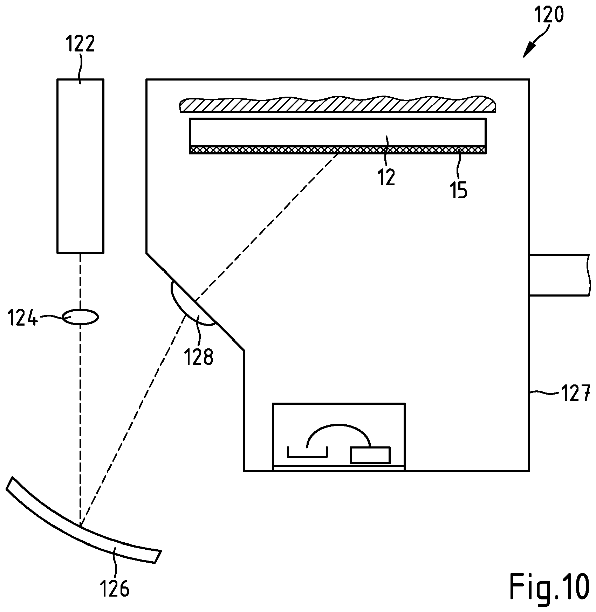

Die Fig. 10 zeigt eine weitere Anlage 120 für das Erzeugen der vorstehend erläuterten mikroskopischen bzw. mesoskopsichen Poren in der Beschichtung 15 von einem optischen Element 10'.

Die Anlage 120 enthält einen Laser 122 für das Erzeugen von gepulstem Laserlicht, für dessen Pulsdauer $t_P$ bevorzugt gilt: $t_P \leq 15$ ns.Der Laserstrahl wird durch eine Optik 124 auf ein hochreflektierendes Target 126 gerichtet, das als ein Amplituden- oder bevorzugt als ein reines Phasenobjekt wirkt und auf dem optischen Element 10' ein Specklemuster erzeugt.

Die Anlage 120 umfasst eine Vakuumkammer 127 mit einem optischen Fenster 128, das als Linse wirkt. Durch das Fenster 128 wird das Laserlicht des Lasers 122 auf das in der Vakuumkammer 126 angeordnete optische Element 10' gelenkt. Die Wellenlänge des Laserlichts ist dabei so gewählt, dass dieses in der Beschichtung 15 des optischen Elements 10' absobiert wird und dabei in der Beschichtung 15 entsprechende Löcher 100 erzeugt.

Weitere Abwandlungen und Weiterbildungen der Erfindung ergeben sich durch Kombination verschiedener Merkmale der im Vorhergehenden beschriebenen Ausführungsbeispiele. Zu bemerken ist auch, dass ein erfindungsgemäßes optisches Element insbesondere als eine Linse, als ein Brillenglas oder auch als ein Brillenglas-Rohling oder ein Brillenglas-Halbfabrikat ausgebildet sein kann.

Zusammenfassend sind insbesondere die folgenden bevorzugen Merkmale der Erfindung festzuhalten. Ein optisches Element 10, 10', z.B. ein Brillenglas oder Brillenglas-Rohling hat einen aus einem bevorzugt in dem sichtbaren Spektralbereich transparenten Kunststoff hergestellten Substratkörper 12 und eine mehrere Schichten 14, 16, 18 aufweisende Beschichtung 15, die eine an den Substratkörper 12 angrenzende Hartlackschicht 14 umfasst. Die Beschichtung 15 hat eine Diffusivität $D_F$, die das Aufnehmen von durch die Beschichtung 15 hindurchtretenden Wassermolekülen in dem Substratkörper 12 und das Freigeben von Wassermolekülen aus dem Substratkörper 12 durch die Beschichtung 15 hindurch aus einer auf der dem Substratkörper 12 abgewandten Seite der Beschichtung 15 angeordneten Luftatmosphäre mit einer Feuchtigkeitsstromdichte $j_D$ gewährleistet, die ausgehend von dem Gleichgewichtszustand der Menge der in dem Substratkörper 12 in einer Luftatmosphäre bei 23°C und 50% relativer Luftfeuchte eingelagerten Wassermoleküle das Einstellen des Gleichgewichtszustands der Menge der in dem Substratkörper 12 in einer Luftatmosphäre bei 40°C und 95% relativer Luftfeuchte eingelagerten Wassermoleküle innerhalb eines Zeitintervalls bewirkt, das um nicht mehr als eine Zeitspanne der Länge $\Delta t = 10h$, bevorzugt um nicht mehr als eine Zeitspanne der Länge $\Delta t = 9h$ oder $\Delta t = 8h$ oder $\Delta t = 7h$ oder $\Delta t = 6h$ oder $\Delta t = 5h$ oder $\Delta t = 4h$ oder $\Delta t = 3h$ oder $\Delta t = 2h$, besonders bevorzugt um nicht mehr als eine Zeitspanne der Länge $\Delta t = 1h$ länger ist als das für das Einstellen dieses Gleichgewichtszustands unter entsprechenden Bedingungen bei einem zu dem Substratkörper 12 identischen unbeschichteten Substratkörper erforderliche Zeitintervall.

**Bezugszeichenliste:**

| | |
|---|---|
| 10,10' | optisches Element |
| 12 | Substratkörper |
| 14 | Hartlackschicht |
| 15 | Beschichtung |
| 16,18,20,22,23,24,26,28,30,32 | Schichten |
| 34,35,72 | Kurven |
| 40,60,80,110,120 | Anlage |

| 42,44 | Elektroden |
|---|---|
| 46 | Blitzregen |
| 48 | Oberfläche |
| 50 | Niederdruck-Plasmaanlage |
| 52,62,82,112 | Vakuumkammer |
| 54, 64 | Anschluss |
| 56 | Gas-Einlass |
| 58 | Mikrowellengenerator |
| 66 | Gas-Einlass |
| 68, 86,88 | Glimmelektrode |
| 70 | Graph |
| 84 | Öffnung |
| 90,92 | Durchführungen |
| 93 | Elektronenstrahlverdampfer |
| 100 | Löcher |
| 114 | Elektronen und/oder Ionenquelle |
| 115 | Beschichtung |
| 116 | Beschleunigungseinheit |
| 118 | Ablenkungseinheit |
| 122 | Laser |
| 124 | Optik |
| 126 | Target |
| 128 | Fenster |

**Patentansprüche**

1. Optisches Element (10, 10'), insbesondere Brillenglas oder Brillenglas-Rohling, mit einem aus einem transparenten Kunststoff hergestellten Substratkörper (12) und mit einer mehrere Schichten (14, 16, 18) aufweisenden Beschichtung (15), die eine an den Substratkörper (12) angrenzende Hartlackschicht (14) und eine auf der Hartlackschicht (14) angeordnete Antireflexbeschichtung mit einem ein- oder mehrschichtigen Aufbau umfasst, **dadurch gekennzeichnet, dass** die Beschichtung (15) eine Diffusivität $D_F$ hat, die das Aufnehmen von durch die Beschichtung (15) hindurchtretenden Wassermolekülen in dem Substratkörper (12) und das Freigeben von Wassermolekülen aus dem Substratkörper (12) durch die Beschichtung (15) hindurch aus einer auf der dem Substratkörper (12) abgewandten Seite der Beschichtung (15) angeordneten Luftatmosphäre mit einer Feuchtigkeitsstromdichte $j_D$ gewährleistet, die ausgehend von einem Gleichgewichtszustand der Menge der in dem Substratkörper (12) in einer Luftatmosphäre bei 23°C und 50% relativer Luftfeuchte eingelagerten Wassermoleküle, der dadurch definiert ist, dass sich die Zahl der in den Substratkörper eingelagerten Wassermoleküle innerhalb von 24h um nicht mehr als 1 % ändert, das Einstellen des Gleichgewichtszustands der Menge der in dem Substratkörper (12) in einer Luftatmosphäre bei 40°C und 95% relativer Luftfeuchte eingelagerten Wassermoleküle innerhalb eines Zeitintervalls bewirkt, das um nicht mehr als eine Zeitspanne der Länge $\Delta t = 10h$, bevorzugt um nicht mehr als eine Zeitspanne der Länge $\Delta t = 9h$ oder $\Delta t = 8h$ oder $\Delta t = 7h$ oder $\Delta t = 6h$ oder $\Delta t = 5h$ oder $\Delta t = 4h$ oder $\Delta t = 3h$ oder $\Delta t = 2h$, besonders bevorzugt um nicht mehr als eine Zeitspanne der Länge $\Delta t = 1h$, länger ist als das für das Einstellen dieses Gleichgewichtszustands unter entsprechenden Bedingungen bei einem zu dem Substratkörper (12) identischen unbeschichteten Substratkörper erforderliche Zeitintervall, wobei in der Beschichtung (15) eine Vielzahl von vorzugsweise mikroskopischen und/oder mesoskopischen Poren insbesondere in Form von Löchern (100) ausgebildet sind, die sich ausgehend von der Oberfläche (48) der Beschichtung (15) auf der dem Substratkörper (12) abgewandten Seite mindestens bis zu der Hartlackschicht (14) erstrecken.

2. Optisches Element nach Anspruch 1, **dadurch gekennzeichnet, dass** die Beschichtung (15) eine Kratzfestigkeit hat, die einer in einem eine Kratzfestigkeit der Beschichtung (15) charakterisierenden erweiterten Bayer-Test ermittelten Bayer-Zahl $Z_B$ mit $Z_B \geq 8$, vorzugsweise $Z_B \geq 10$, insbesondere $Z_B \geq 14$ entspricht.

3. Optisches Element nach Anspruch 1 oder 2, **dadurch gekennzeichnet, dass** die Beschichtung (15) wenigstens eine Antireflexbeschichtung mit mindestens einer in einer Vakuumkammer aufgedampften Teilschicht enthält, die mittels Ionenbeschuss verdichtet ist, vorzugsweise mittels Ionenbeschuss bei einer Ionenstromdichte $I \geq 30\mu A/cm^2$ an dem Ort der Teilschicht während der Dauer eines Aufdampfvorgangs für das Erzeugen der Teilschicht.

**4.** Optisches Element nach einem der Ansprüche 1 bis 3, **dadurch gekennzeichnet, dass** die Beschichtung (15) wenigstens eine im Wesentlichen aus $SiO_2$ bestehende Quarzschicht (30) oder eine aus einer Mischung aus $SiO_2$ und $Al_2O_3$ bestehende Schicht mit einer Schichtdicke $d \geq 100$ nm aufweist.

**5.** Optisches Element nach einem der Ansprüche 1 bis 4, **dadurch gekennzeichnet, dass** der Durchmesser $D_L$ der Löcher (100) der folgenden Beziehung genügt: $D_L \leq 5\mu m$, vorzugsweise $D_L \leq 1\mu m$, besonders bevorzugt $D_L \leq 0,2\mu m$.

**6.** Optisches Element nach einem der Ansprüche 1 bis 5, **dadurch gekennzeichnet, dass** die mikroskopischen und/oder mesoskopischen Poren in der Beschichtung (15) unregelmäßig angeordnet sind.

**7.** Optisches Element nach einem der Ansprüche 1 bis 6, **dadurch gekennzeichnet, dass** die mikroskopischen und/oder mesoskopischen Poren in wenigstens einem Abschnitt der Beschichtung (15) translationssymmetrisch angeordnet, wobei für die Raumfrequenz k der Anordnung der mikroskopischen und/oder mesoskopischen Poren gilt: k >> 1 / 400nm oder k << 1 / 800nm.

**8.** Optisches Element nach einem der Ansprüche 1 bis 7, **dadurch gekennzeichnet, dass** die mesoskopischen Poren durch Beaufschlagen der Beschichtung (15) oder von Schichten (30) in der Beschichtung mit einem vorzugsweise hochenergetischen Teilchenstrahl hergestellt sind, insbesondere durch Beaufschlagen mit einem Teilchenstrahl, der Edelgasatome und/oder Kohlenstoffatome und/oder Goldatome enthält, und/oder, dass die mesoskopischen Poren durch Beaufschlagen der Beschichtung (15) oder von Schichten (30) in der Beschichtung (15) mit gepulstem Laserlicht hergestellt sind.

**9.** Optisches Element nach einem der Ansprüche 1 bis 8, **dadurch gekennzeichnet, dass** auf wenigstens einer innenliegenden Schicht der Beschichtung (15), insbesondere auf der Hartlackschicht 14), und/oder auf und/oder in dem Substratkörper (12) Fremdstoffe in Form von Fremdmolekülen oder Nanopartikel angelagert sind und/oder dass auf wenigstens einer innenliegenden Schicht der Beschichtung (15), insbesondere auf der Hartlackschicht (14) Fremdstrukturen angebracht sind.

**10.** Verfahren zur Herstellung eines optischen Elements (10,10') nach Anspruch 1, umfassend die Schritte

- Bereitstellen eines Substratkörpers (12), der aus einem transparenten Kunststoff hergestellt ist,
- Aufbringen einer mehrere Schichten aufweisenden Beschichtung (15) auf dem Substratkörper (12), wobei
- die Beschichtung (15) eine an den Substratkörper (12) angrenzende Hartlackschicht (14) hat, die durch Aufbringen einer Sol-Gel-Hartlackzusammensetzung auf den Substratkörper (12) erzeugt wird, und wobei
- die Beschichtung (15) wenigstens eine auf der Hartlackschicht (14) angeordnete Antireflexbeschichtung mit einem mit einem ein- oder mehrschichtigen Aufbau aufweist,

**dadurch gekennzeichnet, dass**

- die Hartlackschicht (14) vor dem Aufbringen der Antireflexbeschichtung mit einer Corona-Entladung und/oder mit einem Niederdruck-Luftplasma und/oder mit einer Glimmentladung behandelt wird, und
- in der Beschichtung (15) eine Vielzahl von vorzugsweise mikroskopischen und/oder mesoskopischen Poren insbesondere in Form von Löchern (100) ausgebildet werden, die sich ausgehend von der Oberfläche (48) der Beschichtung (15) auf der dem Substratkörper (12) abgewandten Seite bis mindestens zu der Hartlackschicht (14) erstrecken.

**11.** Verfahren nach Anspruch 11, **dadurch gekennzeichnet, dass**

- auf der Hartlackschicht (14) vor dem Aufbringen der wenigstens einen weiteren optischen Schicht (16, 18, 20) Fremdstoffe, insbesondere Fremdmoleküle und/oder Fremdstrukturen, insbesondere Nanopartikel angelagert werden,
und/oder
- dass auf wenigstens einer innenliegenden Schicht (16, 18, 20) der Beschichtung (15), insbesondere auf der Hartlackschicht (14) mittels Laserlicht und/oder durch Teilchenbeschuss und/oder mittels Drucken, insbesondere mittels Nanoimprints Fremdstrukturen angebracht werden.

**Claims**

1. Optical element (10, 10'), in particular spectacle lens or spectacle lens blank, having a substrate body (12) produced from a transparent plastic, and having a coating (15) having a plurality of layers (14, 16, 18), said coating comprising a hard lacquer layer (14) adjoining the substrate body (12) and an antireflection coating arranged on the hard lacquer layer (14) and having a mono- or multilayer construction,
**characterized in that**
the coating (15) has a diffusivity $D_F$ that ensures the absorption of water molecules passing through the coating (15) in the substrate body (12) and the release of water molecules from the substrate body (12) through the coating (15) from an air atmosphere arranged on the side of the coating (15) facing away from the substrate body (12) with a moisture flow density $j_D$ which, proceeding from an equilibrium state of the quantity of water molecules incorporated in the substrate body (12) in an air atmosphere at 23 °C and 50 % relative air humidity, said equilibrium state being defined by the fact that the number of water molecules incorporated into the substrate body changes by not more than 1 % within 24 h, brings about the setting of the equilibrium state of the quantity of water molecules incorporated in the substrate body (12) in an air atmosphere at 40 °C and 95 % relative air humidity within a time interval which is longer by not more than a time period of the length $\Delta t = 10$ h, preferably by not more than a time period of the length $\Delta t = 9$ h or $\Delta t = 8$ h or $\Delta t = 7$ h or $\Delta t = 6$ h or $\Delta t = 5$ h or $\Delta t = 4$ h or $\Delta t = 3$ h or $\Delta t = 2$ h, particularly preferably by not more than a time period of the length $\Delta t = 1$ h, than the time interval required for setting said equilibrium state under corresponding conditions in the case of an uncoated substrate body identical to the substrate body (12), wherein there are formed in the coating (15) a multiplicity of preferably microscopic and/or mesoscopic pores in particular in the form of the holes (100), which, proceeding from the surface (48) of the coating (15), extend on the side facing away from the substrate body (12) at least as far as the hard lacquer layer (14).

2. Optical element according to Claim 1, **characterized in that** the coating (15) has a scratch resistance corresponding to a Bayer figure $Z_B$ where $Z_B \geq 8$, preferably $Z_B \geq 10$, in particular $Z_B \geq 14$, which is determined in an extended Bayer test characterizing a scratch resistance of the coating (15).

3. Optical element according to Claim 1 or 2, **characterized in that** the coating (15) contains at least one antireflection coating having at least one partial layer applied by vapour deposition in a vacuum chamber, which is densified by means of ion bombardment, preferably by means of ion bombardment at an ion current density $I \geq 30$ $\mu A/cm^2$ at the location of the partial layer during the duration of a vapour deposition process for producing the partial layer.

4. Optical element according to any of Claims 1 to 3, **characterized in that** the coating (15) has at least one quartz layer (30) substantially consisting of $SiO_2$ or a layer consisting of a mixture of $SiO_2$ and $Al_2O_3$ and having a layer thickness $d \geq 100$ nm.

5. Optical element according to any of Claims 1 to 4, **characterized in that** the diameter $D_L$ of the holes (100) satisfies the following relationship: $D_L \leq 5$ $\mu m$, preferably $D_L \leq 1$ $\mu m$, particularly preferably $D_L \leq 0.2$ $\mu m$.

6. Optical element according to any of Claims 1 to 5, **characterized in that** the microscopic and/or mesoscopic pores are arranged irregularly in the coating (15).

7. Optical element according to any of Claims 1 to 6, **characterized in that** the microscopic and/or mesoscopic pores are arranged in a translationally symmetrical manner in at least one section of the coating (15), wherein the following holds true for the spatial frequency k of the arrangement of the microscopic and/or mesoscopic pores: k >> 1/400 nm or k << 1/800 nm.

8. Optical element according to any of Claims 1 to 7, **characterized in that** the mesoscopic pores are produced by applying a preferably highly energetic particle beam to the coating (15) or to layers (30) in the coating, in particular by applying a particle beam containing noble gas atoms and/or carbon atoms and/or gold atoms, and/or **in that** the mesoscopic pores are produced by applying pulsed laser light to the coating (15) or to layers (30) in the coating (15).

9. Optical element according to any of Claims 1 to 8, **characterized in that** foreign substances in the form of foreign molecules or nanoparticles are deposited on at least one inner layer of the coating (15), in particular on the hard lacquer layer (14), and/or on and/or in the substrate body (12), and/or **in that** foreign structures are mounted on at least one inner layer of the coating (15), in particular on the hard lacquer layer (14).

10. Method for producing an optical element (10, 10') according to Claim 1, comprising the steps of

- providing a substrate body (12) produced from a transparent plastic,
- applying a coating (15) having a plurality of layers on the substrate body (12), wherein
- the coating (15) has a hard lacquer layer (14) adjoining the substrate body (12) and produced by applying a sol-gel hard lacquer composition to the substrate body (12), and wherein
- the coating (15) has at least one antireflection coating arranged on the hard lacquer layer (14) and having a mono- or multilayer construction,

**characterized in that**

- before the antireflection coating is applied, the hard lacquer layer (14) is treated with a corona discharge and/or with a low-pressure air plasma and/or with a glow discharge, and
- there are formed in the coating (15) a multiplicity of preferably microscopic and/or mesoscopic pores in particular in the form of holes (100), which, proceeding from the surface (48) of the coating (15), extend on the side facing away from the substrate body (12) at least as far as the hard lacquer layer (14).

11. Method according to Claim 10, **characterized in that**

- foreign substances, in particular foreign molecules and/or foreign structures, in particular nanoparticles, are deposited on the hard lacquer layer (14) before the at least one further optical layer (16, 18, 20) is applied, and/or
- **in that** foreign structures are mounted on at least one inner layer (16, 18, 20) of the coating (15) in particular on the hard lacquer layer (14), by means of laser light and/or by particle bombardment and/or by means of printing, in particular by means of nanoimprints.

**Revendications**

1. Élément optique (10, 10'), notamment verre de lunette ou ébauche de verre de lunette, comprenant un corps de substrat (12) fabriqué à partir d'une matière plastique transparente et comprenant un revêtement (15) qui possède plusieurs couches (14, 16, 18), lequel comporte une couche de vernis dur (14) jouxtant le corps de substrat (12) et un revêtement antireflet disposé sur la couche de vernis dur (14) et ayant une structure mono- ou multicouche, **caractérisé en ce que** le revêtement (15) possède un coefficient de diffusion $D_F$ qui garantit l'absorption dans le corps de substrat (12) des molécules d'eau qui traversent le revêtement (15) et la libération des molécules d'eau hors du corps de substrat (12) à travers le revêtement (15) depuis une atmosphère d'air disposée sur un côté du revêtement (15) à l'opposé du corps de substrat (12) avec une densité de flux d'humidité $j_D$ qui, à partir d'un état d'équilibre de la quantité de molécules d'eau emmagasinées dans le corps de substrat (12) dans une atmosphère d'air à 23 °C et avec 50 % d'humidité relative de l'air, lequel est défini **en ce que** le nombre de molécules d'eau emmagasinées dans le corps de substrat en 24 heures ne varie pas plus de 1 %, provoque l'établissement de l'état d'équilibre de la quantité de molécules d'eau emmagasinées dans le corps de substrat (12) dans une atmosphère d'air à 40 °C et avec 95 % d'humidité relative de l'air dans un intervalle de temps qui n'est pas plus long d'un laps de temps de longueur $\Delta t = 10$ h, de préférence pas plus long d'un laps de temps de longueur $\Delta t = 9$ h ou $\Delta t = 8$ h ou $\Delta t = 7$ h ou $\Delta t = 6$ h ou $\Delta t = 5$ h ou $\Delta t = 4$ h ou $\Delta t = 3$ h ou $\Delta t = 2$ h, notamment de préférence pas plus long d'un laps de temps de longueur $\Delta t = 1$ h que l'intervalle de temps nécessaire pour l'établissement de cet état d'équilibre dans des conditions correspondantes avec un corps de substrat non revêtu identique au corps de substrat (12), une pluralité de pores de préférence microscopiques et/ou mésoscopiques étant formés dans le revêtement (15), notamment sous la forme de trous (100) qui s'étendent depuis la surface (48) du revêtement (15) sur le côté opposé au corps de substrat (12) au moins jusqu'à la couche de vernis dur (14).

2. Élément optique selon la revendication 1, **caractérisé en ce que** le revêtement (15) possède une résistance à l'abrasion qui correspond à un nombre Bayer $Z_B$, déterminé dans un test Bayer étendu qui caractérise une résistance à l'abrasion du revêtement (15), avec $Z_B \geq 8$, de préférence $Z_B \geq 10$, notamment $Z_B \geq 14$.

3. Élément optique selon la revendication 1 ou 2, **caractérisé en ce que** le revêtement (15) contient au moins un revêtement antireflet comportant au moins une couche partielle appliquée par métallisation dans une chambre sous vide, laquelle est comprimée au moyen d'un bombardement ionique, de préférence au moyen d'un bombardement ionique avec une densité de flux ionique $I \geq 32$ $\mu A/cm^2$ à l'endroit de la couche partielle pendant la durée d'une opération de métallisation sous vide pour la génération de la couche partielle.

**4.** Élément optique selon l'une des revendications 1 à 3, **caractérisé en ce que** le revêtement (15) possède au moins une couche de quartz (30) composée sensiblement de $SiO_2$ ou une couche composée d'un mélange de $SiO_2$ et d'$Al_2O_3$ ayant une épaisseur de couche $d \geq 100$ nm.

**5.** Élément optique selon l'une des revendications 1 à 4, **caractérisé en ce que** le diamètre $D_L$ des trous (100) vérifie la relation suivante : $D_L \leq 5\ \mu m$, de préférence $D_L \leq 1\ \mu m$, notamment de préférence $D_L \leq 0,2\ \mu m$.

**6.** Élément optique selon l'une des revendications 1 à 5, **caractérisé en ce que** les pores microscopiques et/ou mésoscopiques sont disposés de manière irrégulière dans le revêtement (15).

**7.** Élément optique selon l'une des revendications 1 à 6, **caractérisé en ce que** les pores microscopiques et/ou mésoscopiques sont disposés en symétrie de translation dans au moins une portion du revêtement (15), la fréquence spatiale k de l'arrangement des pores microscopiques et/ou mésoscopiques étant telle que : k >> 1/400 nm ou k << 1/800 nm.

**8.** Élément optique selon l'une des revendications 1 à 7, **caractérisé en ce que** les pores mésoscopiques sont produits en soumettant le revêtement (15) ou des couches (30) dans le revêtement à un rayonnement de particules de préférence à haute énergie, notamment en le soumettant à un rayonnement de particules qui contient des atomes de gaz rare et/ou des atomes de carbone et/ou des atomes d'or, et/ou en ce que les pores mésoscopiques sont produits en soumettant le revêtement (15) ou des couches (30) dans le revêtement (15) à une lumière laser pulsée.

**9.** Élément optique selon l'une des revendications 1 à 8, **caractérisé en ce que** des corps étrangers sous la forme de molécules tierces ou de nanoparticules sont fixés par addition sur au moins une couche interne du revêtement (15), notamment sur la couche de vernis dur (14) et/ou sur et/ou dans le corps de substrat (12), et/ou **en ce que** des structures tierces sont appliquées sur au moins une couche interne du revêtement (15), notamment sur la couche de vernis dur (14).

**10.** Procédé de fabrication d'un élément optique (10, 10') selon la revendication 1, comprenant les étapes suivantes

- fourniture d'un corps de substrat (12) fabriqué à partir d'une matière plastique transparente,
- application d'un revêtement (15) qui possède plusieurs couches sur le corps de substrat (12),
- le revêtement (15) comportant une couche de vernis dur (14) jouxtant le corps de substrat (12), laquelle est produite par application d'une composition de vernis dur sol-gel sur le corps de substrat (12), et
- le revêtement (15) possédant au moins un revêtement antireflet disposé sur la couche de vernis dur (14) et ayant une structure mono- ou multicouche,

**caractérisé en ce que**

- avant l'application du revêtement antireflet, la couche de vernis dur (14) est traitée avec une décharge corona et/ou avec un plasma d'air à basse pression et/ou avec une décharge lumineuse et
- une pluralité de pores de préférence microscopiques et/ou mésoscopiques sont formés dans le revêtement (15), notamment sous la forme de trous (100) qui s'étendent depuis la surface (48) du revêtement (15) sur le côté opposé au corps de substrat (12) au moins jusqu'à la couche de vernis dur (14).

**11.** Procédé selon la revendication 11, **caractérisé en ce que**

- des corps étrangers, notamment des molécules tierces et/ou des structures tierces, notamment des nanoparticules, sont fixés par addition sur la couche de vernis dur (14) avant l'application de l'au moins une couche optique supplémentaire (16, 18, 20),
et/ou
- **en ce que** des structures tierces sont appliquées sur au moins une couche interne (16, 18, 20) du revêtement (15), notamment sur la couche de vernis dur (14), au moyen de lumière laser et/ou par bombardement de particules et/ou au moyen de l'impression, notamment au moyen de nanoimpression.

Fig.1

Fig.2

Fig.3

Fig.4

Fig.5

Fig.6

Fig.7

Fig.8

110

114

116

118

112

12

15

Fig.9

Fig.10

**EP 2 801 846 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2437084 A1
- EP 0698798 A2
- US 2011058142 A1
- US 2011305827 A1

**In der Beschreibung aufgeführte Nicht-Patentliteratur**

- **U. SCHULZ et al.** Near-infrared spectroscopy for monitoring water permeability of optical coatings on plastics. *Applied Optics,* 1997, vol. 862, 26
- **KUI-XIANG MA et al.** Investigation of surface energy for organic light emitting polymers and indium tin oxide. *Thin Solid Films,* 2000, vol. 140, 371